# EUROPEAN PATENT SPECIFICATION

(11) **EP 2 965 467 B1**
(45) Date of publication and mention of the grant of the patent: **11.09.2019**
(21) Application number: 13708412.5
(22) Date of filing: 07.03.2013
(51) Int. Cl.: H04L 12/24

(54) **A NETWORK ELEMENT FOR A TELECOMMUNICATIONS NETWORK HAVING DECOUPLED CONTROL AND DATA PLANES**
NETZWERKELEMENT FÜR EIN TELEKOMMUNIKATIONSNETZWERK MIT ENTKOPPELTER STEUERUNGS- UND DATENEBENEN
ÉLÉMENT DE RÉSEAU POUR UN RÉSEAU DE TÉLÉCOMMUNICATIONS AYANT DES PLANS DE COMMANDE ET DE DONNÉES DÉCOUPLÉS

(43) Date of publication of application: 13.01.2016
(73) Proprietor: Telefonaktiebolaget LM Ericsson (publ), 164 83 Stockholm (SE)
(72) Inventor: CAVIGLIA, Diego, I-16153 Genova (IT); REBELLA, Paolo, I-16153 Genova (IT); CECCARELLI, Daniele, I-16153 Genova (IT)
(74) Representative: Brann AB
(86) International application number: PCT/EP2013/054616
(87) International publication number: WO 2014/135212

(56) References cited:
- US-A1- 2006 018 253
- YANG INTEL CORP R DANTU UNIV OF NORTH TEXAS T ANDERSON INTEL CORP R GOPAL NOKIA L: "Forwarding and Control Element Separation (ForCES) Framework; rfc3746.txt", 20040401, April 2004 (2004-04), XP015009526, ISSN: 0000-0003

## Description

### Technical Field

This invention relates to a network element for a telecommunications network having decoupled control and data planes and a method of operating the same.

### Background

Telecommunication networks include a control plane and data plane. Conventionally, the functions of the control plane include system configuration and routing (exchange of routing information). A router may collect routing information from adjacent routers using routing protocols, which is used to build a topology database (such as a link state database or routing table). The routing table is updated infrequently and is thus not suitable for fast packet forwarding. Accordingly, routers typically include a data (forwarding) plane to expedite the forwarding process.

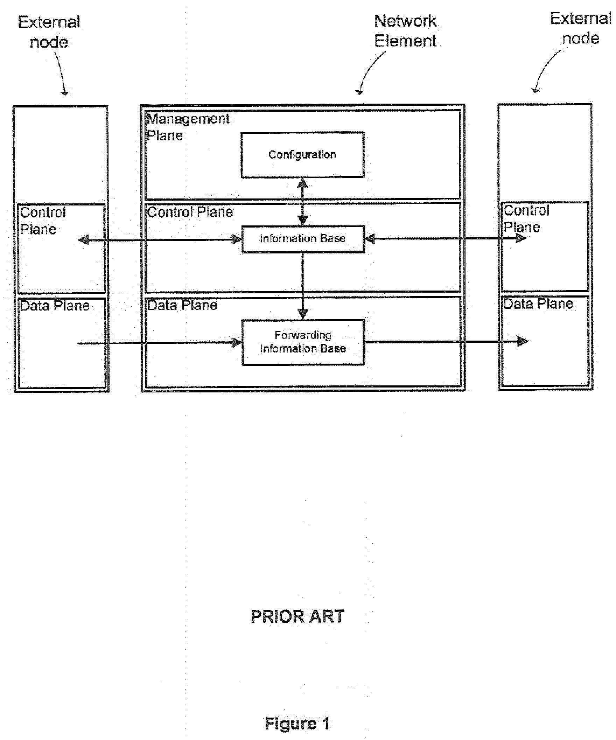

The data plane includes a forwarding table. The forwarding table is populated with data from the control plane allowing fast forwarding of incoming packets at the data plane onto their destination. A conventional architecture of a network element configured for implementing both the control and data plane functionality is shown in Figure 1.

In some networks (such as Generalized Multi-Protocol Label Switching, GMPLS, or Software Defined Networks, SDN), the control plane and data plane are decoupled. The skilled person will understand that the term 'decoupled' means that, ideally, a failure event in one plane does not affect the other plane. Therefore, in the event of a control plane failure, the data plane may continue to forward traffic. It is also possible (but not mandatory) that the control plane and data plane are implemented on separate physical paths and interfaces.

The network elements benefit from this decoupling as the data plane may continue to forward data traffic in the event of a fault in the control plane. However, in the reverse situation (in which there is an event in the data plane), the control plane in a conventional network continues to be affected. The skilled person will understand that the term 'decoupled' means that a failure in the control plane does not affect the data plane.

As an example, in GMPLS controlled transport networks, it is common for the network elements to undergo maintenance procedures such as a software download or internal database recovery. These operations do not directly affect the data plane (such as forwarding of existing data traffic flows), but compromise the management plane and control plane capabilities of the network element as they may, for example, not be able to export consistent information to the Network Management System or react appropriately to possible failures.

Accordingly, network operators handle an event (such as a planned maintenance) in the data plane in several exemplary ways. In one example, the network operator disables the control plane whilst the data plane is inactive. This downtime naturally results in the control plane functions being unnecessarily lost for the time it is disabled. In another example, the control plane reacts to the data plane inactivity as if a failure event occurred in the data plane. This erroneous determination results in an unnecessary occupation of spare resources and, on reactivation, the data plane reverts to nominal path procedures.

There are known documents related to handling failures of a control plane, namely US2006018253A1 and RFC3746. However devices and operations as in the invention now to be described are neither disclosed nor suggested in these documents.

It is therefore desirable to alleviate some or all of the above problems.

### Summary

According to a first aspect of the invention, there is provided a network element for a communications network, the communications network having a control plane and a data plane which are decoupled, the network element comprising a processor configured for implementing data plane and control plane functionality, wherein the network element is configured to be in one of: a first state in which the network element operates as normal and in which a configuration of the data plane changes in response to the data plane receiving a control message from the control plane, and a second state in which the network element is configured to suppress a control message from the control plane for the data plane such that the configuration of the data plane is preserved.

The present invention therefore defines two new states for the network element. These offer significant improvements in the management of telecommunication networks having decoupled control and data planes (such as Generalized Multiprotocol Label Switching networks). For example, in the first state, the network element may operate as normal. However, in the situation in which there is an event in the data plane (such as programmed maintenance) then the network element may be in a second state in which it is configured to suppress a control message for the data plane such that the configuration of the data plane is preserved. Accordingly, the network element may enter a state in which an event in the data plane does not adversely affect the operation of the network element. In conventional network elements, an event in the data plane would result in the control plane being disabled during the event. However, in the present invention, the control plane may continue to receive and operate on routing information, but any control messages may be suppressed until the event is over and the network element returns to the first state.

This reduces the risk of unwanted recovery events (which occurred in conventional network elements after an event in the data plane). Furthermore, the network element may be provided with a memory configured for storing the control message. Therefore, the control plane may continue to receive routing information, and store any control messages it creates in response in the memory whilst it is in the second state. The network element may subsequently act upon the stored control messages when the network element returns to the first state.

The present invention therefore decreases the operational expense of a network. That is, the stability of the telecommunications network is increased as there is a lower risk of unnecessary restoration events, the control plane infrastructure remains active through the data plane event, the status of the network element may be advertised to other nodes in the network, and pending operation on the control plane may not be affected. Furthermore, service disruption is minimized as the control plane may always be monitored by the Network Management System, there is no need for control plane reconfiguration or alignment, and restoration is always consistent.

When in the second state, the control plane may still receive routing information and prepare suitable control messages for the data plane. However, these control messages may be suppressed until the network element returns to the first state. Accordingly, circuit provisioning is still possible even when there is an event in the data plane, as the circuit provision is simply pending until the event is over.

The control message may be suppressed in a number of ways. For example, in the second state, the control plane may be configured such that it does not send the control message to the date plane. Alternatively, in the second state, the control plane may be configured to send the control message to the data plane and the configuration of the data plane is preserved in response to the data plane receiving the control message from the control plane (e.g. the data plane ignores the control message).

In another example, in the second state, the data plane may be configured to reject the control message from the control plane.

The network element may further comprise a communication interface configured for sending a status message to a node in the communications network, the status message indicating whether the network element is in the first or second state. The status message may be sent to all nodes in the communications network. Therefore, other nodes in the network may be informed of the state of the network element. In the case of circuit provisioning, the external node may then determine to use a path which does not include the network element when in the second state. The external node may also be a Network Management System.

The data plane may be configured to send an event report to the control plane when in the first state only.

In one example, the telecommunications network is configured for Generalized Multi-Protocol Label Switching. However, the present invention would be suitable for any form of network having decoupled control and data planes.

The network element may be configured for receiving an administrator message (such as a configuration command) from a Network Operator of the telecommunications network, wherein the administrator message may configure the network element (1) to be in either the first or second state. The administrator message may be sent to the network elements using any suitable means, such as NMS, CLI, GUI, etc. Alternatively, the state of the network element may be set internally.

According to a second aspect of the invention, there is provided a method for controlling a network element of a communications network, the communications network having a control plane and a data plane which are decoupled, the method comprising the steps of: if the network element is in a first state in which the network element operates as normal, the control plane and data plane are configured to interact; and if the network element is in a second state, the network element suppresses a control message from the control plane for the data plane such that the configuration of the data plane is preserved.

A computer program product comprising computer executable code which when executed on a computer may cause the computer to control a node to perform the method of the fourth aspect of the invention.

### Brief Description of the Drawings

Embodiments of the invention will now be described, by way of example, and with reference to the drawings in which:
Figure 1 illustrates a network element of the prior art, showing the management, control and data planes;
Figure 2 illustrates a network element according to a first embodiment of the invention;
Figure 3 illustrates the network element of Figure 2 in a first state, showing the management, control and data planes and memory;
Figure 4 illustrates the network element of Figure 2 in a second state, wherein a control message is stored in the memory;
Figure 5 illustrates the network element of Figure 2 in the first state, wherein the forwarding information base receives the stored control message;
Figure 6 illustrates a network element according to a second embodiment of the invention;
Figure 7 illustrates a network element according to a third embodiment of the invention; and
Figure 8 illustrates a method of an embodiment of the invention.

### Detailed Description

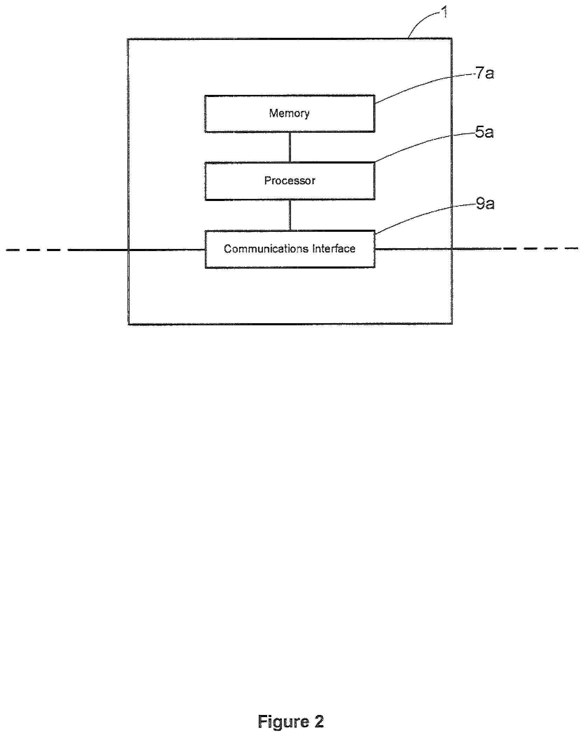

A network element 1 of a first embodiment of the invention will now be described with reference to Figures 2 to 5. The network element 1 is part of a GMPLS telecommunications network having decoupled control and data planes. Figure 2 illustrates the components of the network element 1, including a communications interface 9a for sending and receiving routing information and data packets, a memory 7a (which will be described in more detail below) and a processor 5a. In this embodiment, the processor 5a is configured for implementing the functions of both the control plane and the data plane.

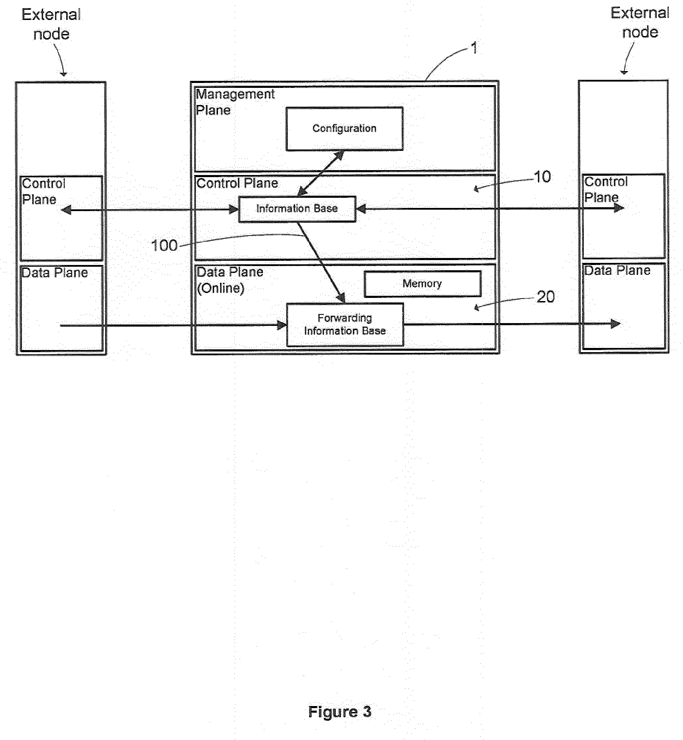

Figure 3 is a schematic representation of the network element 1, showing the various components in their respective planes. Accordingly, the network element 1 is divided into the management plane, control plane 10 and data plane 20. The control plane 10 includes an information base (implemented on processor 5a). The data plane 20 includes a forwarding information base (also implemented on processor 5a, but may also be implemented on a separate processing module within the same network element 1) and a memory 7a. The information base of the control plane 10 is configured to send and receive routing information and the forwarding information base of the data plane 20 is configured to send and receive data packets with external nodes (such as external nodes in the telecommunications network, shown as external nodes in Figures 3 to 5) using the communications interface 9a.

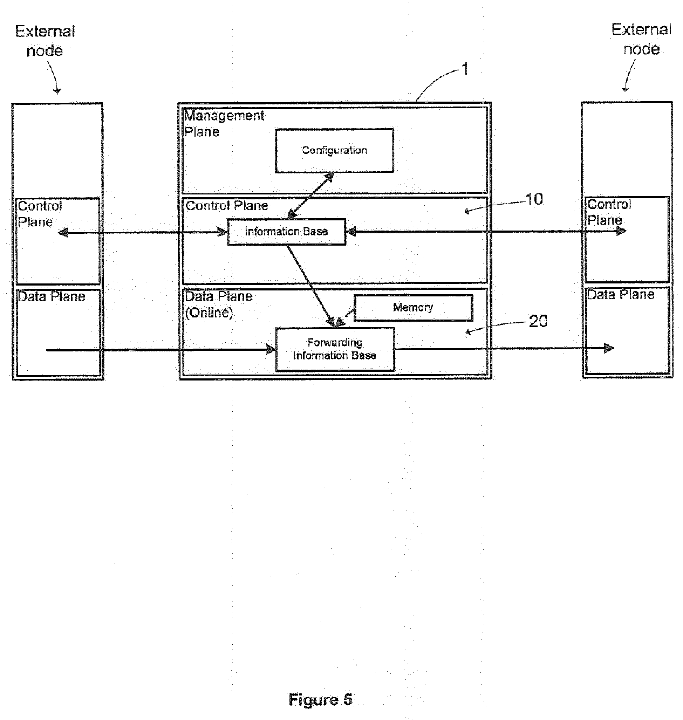

The network element 1 is configured to be in either a first maintenance state or a second maintenance state. In the first maintenance state (indicated as 'online' in Figures 3 and 5), the control plane 10 is configured to send a control message 100 to the data plane 20 and the data plane is configured to change its configuration in response to the control message 100. Thus, in the first state, the control plane 10 and data plane 20 interwork in a generally conventional manner.

The first state is shown in detail in Figure 3, in which the information base sends a control message 100 to the forwarding information base. The forwarding information base therefore updates its routing information based on the contents of the control message 100. This allows the data plane to forward data packets to external nodes using the most appropriate routing.

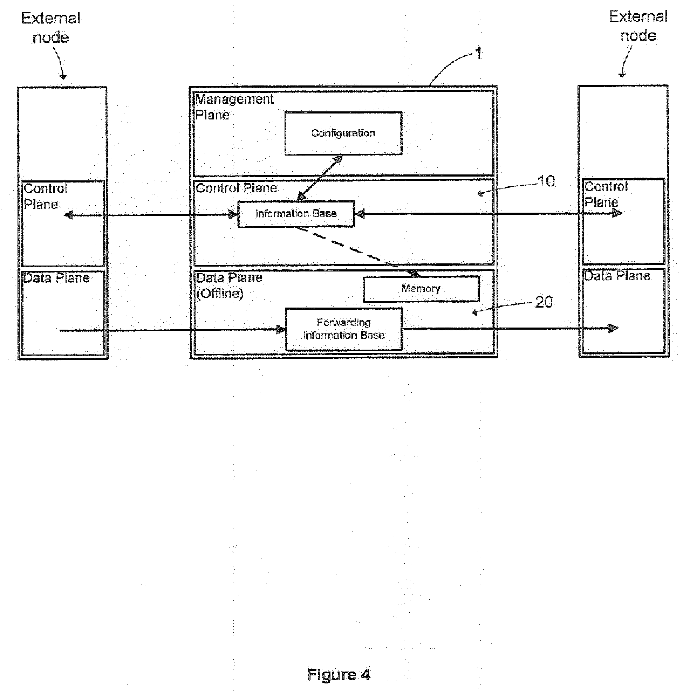

The network element 1 also includes a second maintenance state (indicated as 'offline' in Figure 4). In the second state, the network element 1 is configured to suppress a control message 100 for the data plane 20. The network element 1 may suppress the control message 100 in a number of ways. In one example, when the network element 1 is in the second state, it may suppress the control message 100 by preventing any interaction between the control plane 10 and data plane 20 such that the control message 100 is not sent to the data plane 20. Accordingly, the configuration of the data plane 20 is preserved.

In another example, when the network element 1 is in the second state, the control plane 10 may send the control message 100 to the data plane 20, but the network element suppresses the control message 100 by the data plane 20 rejecting it. Again, the configuration of the data plane 20 is preserved.

The network element 1 may therefore enter the second state (for example, during software download or internal database recovery), and the network element 1 then suppresses any control message during the maintenance operation. This ensures that the control plane 10 does not interact with the data plane 20 during maintenance.

Furthermore, by keeping the control plane 10 operational (compared to the disabled control planes of the conventional network elements during maintenance operations) means that it may continue to monitor its configuration and resource availability (CIT, CC etc.), such that it does not lose configuration information (in the conventional network element, time was wasted when the control plane was subsequently enabled and reconfigured after the maintenance operation).

There are further benefits to keeping the control plane 10 operational. As noted above, the network element 1 further comprises a memory 7a. When the network element 1 is in the second state, it may store a control message 100 for the data plane in the memory 7a. In the examples given above, the network element 1 may therefore suppress the control message such that it is not sent to the data plane 20, but instead the control message 100 is sent to the memory 7a for storage. In the alternative example, the network element may suppress the control message 100 by the data plane 20 rejecting it, and the network element 1 then subsequently stores this rejected control message 100 in memory. Figure 4 illustrates the control message 100 being sent to the memory 7a when the network element 1 is in the second state.

As shown in Figure 5, the network element 1 may then send any stored control messages 100 to the data plane 20 when it returns to the first state (along with any further control messages 100 from the control plane 10).

Thus, the network element 1 may store and subsequently react to control messages 100 that were intended for the data plane 20 when the network element 1 was in the first state, such that the configuration of the data plane 20 is kept up to date. This has particular relevance in the case of circuit provisioning, such that if the network element 1 is part of a new circuit but is in the second state when the circuit is provisioned, it may store the appropriate control message 100 in memory 7a and the configuration of the data plane 20 is updated with the new circuit once the network element 1 returns to the first state.

The network element 1 is also adapted such that its operational state is advertised to external nodes (for example, the communication interface 9a may be configured to send a status message to an external node, wherein the status message indicates whether the network element is in the first or second state). In this embodiment, the network element's operational state is advertised to all nodes in the telecommunications network. This ensures that the external nodes are aware of the operational state of the network element 1, and therefore whether it is appropriate to use its resources. For example, if the network element 1 is in the second state, an external node provisioning a new circuit may then determine that the circuit should not include the network element 1.

Furthermore, the status message may also indicate the state of the network element 1 and if it has a memory for storing control messages. In this case, an external node provisioning a new circuit may then determine that the circuit may include the network element 1, but the circuit will not be operational until the network element 1 returns to the first state (when the network element 1 then configures the data plane 20 according to the stored control message 100).

The network element 1 may therefore be relayed throughout the telecommunications network using an appropriate protocol (e.g. OSPF). Additionally, the network element 1 may also send the status message to a Network Management System using management protocols.

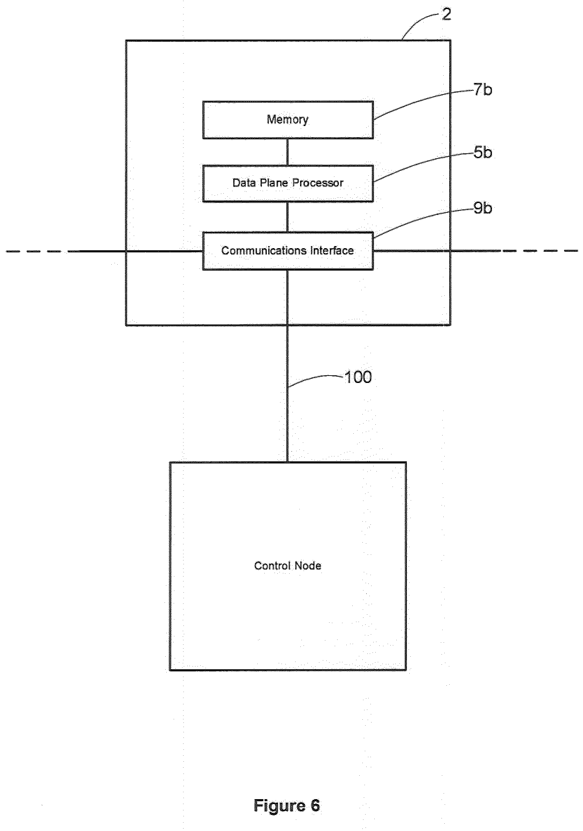

A network element 2 of a second embodiment of the invention will now be described with reference to Figure 6. The network element 2 is again part of a GMPLS telecommunications network having decoupled control and data planes 10, 20. The network element 2 includes a communications interface 9b, a memory 5b and a processor 7b, which are all similar to the components of the first embodiment. However, in this embodiment, the processor 7b is configured to implement the data plane functionality (and not the control plane functionality). The control plane and data plane 20 are therefore implemented on separate physical devices.

The network element 2 is configured to receive a control message 100 from an external node implementing the control plane functionality (hereinafter, the "control node"). The network element, in this example, includes a forwarding information base (implemented on the processor 5b) which may then be updated (such as by reconfiguration of the data plane to set up new data paths) in response to the control message 100.

The network element 2 is again configured to be in either a first maintenance state or a second maintenance state. In the first state, the network element 2 is configured to change the configuration of the data plane 20 in response to the control message 100. However, in the second state, the configuration of the data plane 20 is preserved in response to the control message 100.

The network element 2 may preserve its configuration by ignoring the control message 100 or by rejecting the control message 100 (e.g. by actively rejecting the control message 100 and sending a rejection message to the control node). Upon returning to the first state, the network element 2 may then react to any further control messages 100 from the control node.

Alternatively, the network element 2 may store the control message 100 in memory 7b whilst the network element 2 is in the second state. Upon returning to the first state, the network element 2 may then react to any stored control message 100 and any further control messages 100 from the control node.

As in the first embodiment, the network element 2 may advertise its state to external nodes (such as adjacent routers or a Network Management System) by a status message. The status message may be sent to all nodes in the telecommunications network.

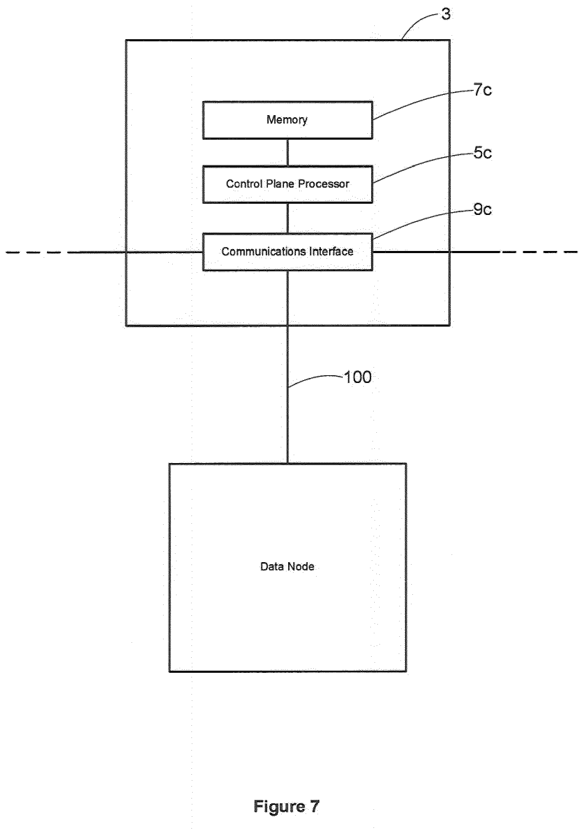

A network element 3 of a third embodiment of the invention will now be described with reference to Figure 7. The network element 3 is again part of a GMPLS telecommunications network having decoupled control and data planes 10, 20. The network element 3 includes a communications interface 9c, a memory 7c and a processor 5c. In this embodiment, the processor 5c is configured to implement the control plane functionality (and not the data plane functionality). For example, the processor 5c may implement an information base which may be updated by routing information received by the communications interface 9c.

The network element 3 is configured to be in either a first maintenance state or a second maintenance state. In the first state, the network element 3 is configured to send a control message 100 to an external node implementing the data plane (hereinafter, the "data node"). In this example, when the network element 3 receives routing information indicating that a new route is to be provisioned on the data plane 20, a control message 100 is sent to the data node. The control message 100 includes the relevant information for the data node to set up the new route in the data plane.

In the second state, the network element 3 is configured to suppress the control message 100. For example, the network element 3 may be configured to not send the control message 100 to the data plane 20 (even though it has received routing information indicating that a new route should be set up by on the data plane). The network element 3 may also be configured to store the control message 100 in the memory 7c whilst the network element 3 is in the second state. Accordingly, the control message 100 is not sent to the data node, such that there is no interaction between the network element 3 and the data node and the configuration of the data plane 20 is preserved.

As in the first and second embodiments, the network element 3 may be configured to advertise its state to an external node (such as an adjacent router or a Network Management System) by a status message. The status message may be sent to all nodes in the telecommunications network.

The skilled person will understand that the three embodiments of network elements 1, 2, 3 of the present invention detailed above all alleviate the problems of the interaction between the control plane and data plane of conventional networks whilst the data plane is undergoing maintenance (such as when downloading software or recovering the internal database). In conventional networks, the control plane is either disabled or it handles the maintenance as if a failure occurred on the data plane (which has undesirable consequences such as unnecessary occupation of spare resources and consequent back to nominal paths procedures). In the embodiments above, the network elements 1, 2, 3 may be in a second state such that the configuration of the data plane is preserved (for example, by the control plane suppressing a control message, or the data plane ignoring or rejecting the control message). Thus, the control plane may continue to run without any interaction with the data plane, such that the circuits in place continue to carry traffic, control infrastructure continues to be operational, and the management plane continues to operate on the network element, but there is no modification of the data plane.

In the above embodiments, the telecommunications network implements Generalized Multiprotocol Label Switching. The introduction of the second maintenance state influences some of the GMPLS components. These will now be discussed in more detail:
- Protocols:
   - Link Management Protocol: a new administrative status may be defined for the Label Switch Router, and the resource status may be frozen. When a network element 1, 2, 3 is in the second state, the 'Hello' message continues to flow. This allows the control channels to remain operational.
   - Open Shortest Path First: the network element 1, 2, 3 state (i.e. the first or second state) may be advertised in the control plane domain. This may be achieved by adding a flag to any of the sub-TLV included into the top level network element TLV.
   - Resource Reservation Protocol: Path and reservation messages may be processed and forwarded by the Label Switch Router even when the network element 1, 2, 3 is in the second state. The 'Path' and 'Resv' may be stored in memory 7a, 7b, 7c whilst the network element 1, 2, 3 is in the second state and may then be acted upon returning to the first state. Notify messages may be processed and forwarded in either state as they have no impact on the data plane 20.
   - Simple Network Management Protocol: A new Link Management Protocol trap may be introduced (e.g. as a 'status message) and sent to the Network Management System to inform the NMS of the change of state for the network element 1, 2, 3.
- Path Computation Element:
   - During circuit restoration, network elements 1, 2, 3 in the second state may be considered unavailable and all of their resources may be considered busy.
   - During circuit setup, network elements 1, 2, 3 in the second state may be considered available and their free resources may be considered usable. The signalling procedure of such circuits will succeed and the circuit will be activated as soon as all of nodes in the circuit (including the network elements 1, 2, 3) are in the first state.

In the first state, the networks elements 1, 2, 3 are configured such that the data plane 20 sends event reports to the control plane 10 and the control plane 10 are configured to receive these event reports. However, the network elements 1, 2, 3 are also configured such that the data plane 20 does not send an event report to the control plane 10 when the network elements 1, 2, 3 are in the second state.

A method for controlling a network element 1, 2, 3 of the present invention will now be described in more detail. The network element 1, 2, 3 is part of a GMPLS telecommunications network having decoupled control and data planes 10, 20. The network element 1, 2, 3 are configured to have a first and second maintenance state.

In the first state, the control plane 10 and data plane 20 are configured to interact. Thus, the control plane 10 and data plane 20 continue to operate in a generally conventional manner. For example, if the network element 1 implements both the control plane 10 and data plane 20, the network element is configured such that a control message 100 is sent from the control plane 10 to the data plane 20, and the data plane 20 is configured to react to the control message 100. In another example, the network element 3 implements only the control plane functionality and, in the first state, is configured to send a control message 100 to an external node implementing the data plane functionality. In another example, the network element 2 implements only the data plane functionality and, in the first state, is configured to receive a control message 100 from an external node implementing the control plane 10 functionality, and reacts to the control message 100 (such as by modifying the configuration of the data plane 20).

In the second state, the network element 1, 2, 3 is configured to suppress the control message 100 for the data plane 20 such that the configuration of the data plane 20 is preserved. For example, if the network element 1 implements both the control plane 10 and data plane 20 functionality, then the network element is configured to suppress the control message 100 by either not sending the control message 100 to the data plane 20, storing the control message 100 in memory 7a, or ensuring the data plane 20 does not react to the control message 100 such as by the data plane 20 ignoring the control message 100 or rejecting it. Thus, the configuration of the data plane 20 is preserved.

In another example, the network element 3 implements the control plane functionality only. In the second state, the network element 3 is either configured to suppress the control message 100 by either not sending the control message 100 to the data plane 20, or by storing it in memory 7c. An external node implementing the data plane functionality therefore does not receive the control message 100 when the network element 3 is in the second state and the configuration of the data plane 20 is preserved.

In another example, the network element 3 implements the data plane functionality only. In the second state, the network element 3 is configured to either ignore or reject the control message 100 or store it in memory 7b. Accordingly, the configuration of the data plane 20 is preserved.

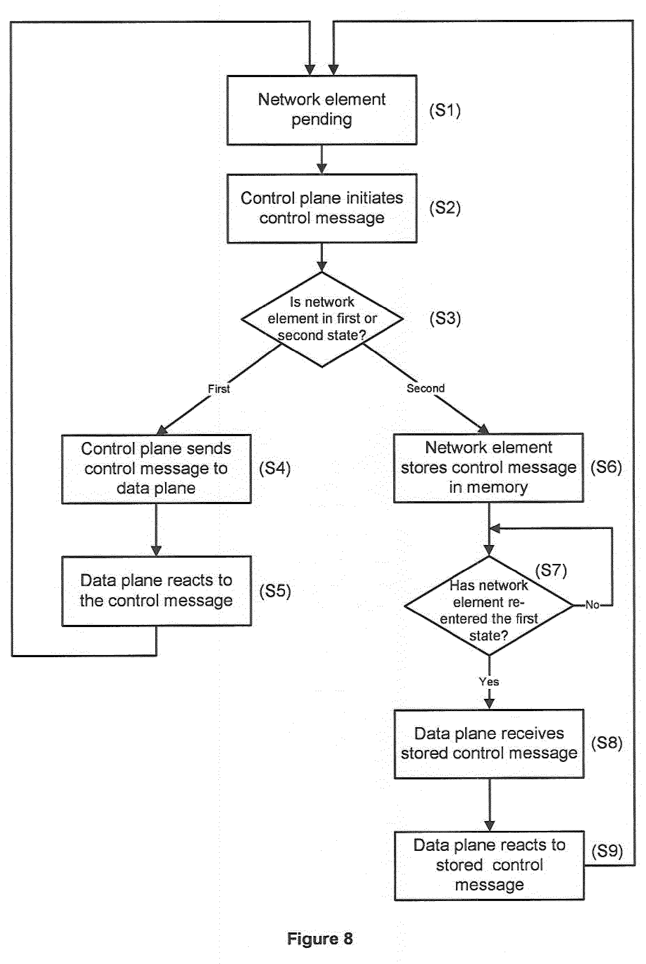

Figure 8 illustrates a flow diagram of an embodiment of the method of the present invention. In this embodiment, the network element 1 implements both the control plane and data plane functionality. The network element is initially pending (step S1) before a control message 100 is initiated (step S2). In this example, the control message 100 is initiated in response to the network element 1 determining that the routing information of the forwarding information base is out-of-date and needs to be reconfigured (this may be in response to the network element 1 receiving updated routing information).

In step S3, the network element 1 determines whether it is in the first or second maintenance state. The state of the network element 1 is administratively set by the network operator. If the network element 1 determines that it is in the first state, the control message 100 is sent to the data plane 20 (step S4) and the data plane 20 reacts to the control message 100 (step S5). The configuration of the data plane 20 is therefore modified according to the contents of the control message 100, and the network element 1 returns to a pending state (step S1).

Alternatively, if the network element 1 determines that it is in the second state, the network element 1 suppresses the control message 100. In the embodiment illustrated in Figure 8, the network element 1 stores the control message 100 in memory 7a (step S6). Accordingly, the data plane 20 does not receive the control message 100 and its configuration is preserved.

In step S7, the network element 1 then determines whether it has returned to the first state (which will be administratively set by the network operator). If the network element 1 remains in the second state, then the network element 1 continues to suppress the control message 100 such that the configuration of the data plane 20 is preserved. However, once the network element 1 returns to the first state (i.e. it receives a message from the Network Operator which reconfigures its maintenance state), the data plane 20 receives the stored control message 100 (step S8) and, in step S9, reacts to it in a conventional manner (e.g. by modifying the configuration of the data plane 20).

In the above embodiments, the telecommunications network is configured for Generalized Multiprotocol Label Switching. However, the skilled person will understand that the network elements 1, 2, 3 and the method of the present invention are applicable to any type of telecommunications network having decoupled control and data planes (such as Software Defined Networks).

The skilled person will also understand that it is not essential for the network elements 1, 2, 3 to include a memory 7a, 7b, 7c. However, by including a memory 7a, 7b, 7c the network element 1, 2, 3 may store a control message 100 for the data plane 20 whilst the network element 1, 2, 3 is in the second state, and subsequently react to the control message (e.g. modify the configuration of the data plane 20) when it returns to the first state. In Figures 3 to 5, the memory is illustrated as being part of the data plane 20, although it may also be considered part of the control plane 10. The skilled person will understand that in the embodiment in which the control plane and data plane are implemented on the same device, the control and data planes may be implemented on the same processor or using separate processing modules.

## Claims

1. A network element (1) for a communications network, the communications network having a control plane (10) and a data plane (20) which are decoupled, the network element (1) comprising a processor (5a) configured for implementing data plane and control plane functionality, wherein the network element is configured to be in one of:
a first state in which the network element operates as normal and in which a configuration of the data plane (20) changes in response to the data plane (20) receiving a control message (100) from the control plane (10), and
a second state in which the network element (1) is configured to suppress a control message (100) from the control plane (10) for the data plane (20) such that the configuration of the data plane (20) is preserved.

2. A network element (1) as claimed in Claim 1, wherein, in the second state, the control plane (1) does not send the control message (100) to the date plane (20).

3. A network element (1) as claimed in Claim 1, wherein, in the second state, the control plane (1) is configured to send the control message (100) to the data plane (20), and the data plane (20) is configured to reject the control message (100) from the control plane (10)..

4. A network element (1) as claimed in any one of the preceding claims, further comprising a memory (7a) configured for storing the control message (100).

5. A network element (1) as claimed in any one of the preceding claims, further comprising a communication interface (9a) configured for sending a status message to a node in the communications network, the status message indicating whether the network element (1) is in the first or second state.

6. A network element (1) as claimed in any one of the preceding claims, wherein the data plane (20) is configured to send an event report to the control plane (10) when in the first state only.

7. A network element (1) as claimed in any one of the preceding claims, configured for receiving an administrator message from a Network Operator of the telecommunications network, wherein the administrator message configures the network element (1) to be in either the first or second state.

8. A method for controlling a network element (1; 2; 3) of a communications network, the communications network having a control plane (10) and a data plane (20) which are decoupled and the network element comprising a processor configured for implementing data plane and control plane functionality, the method comprising the steps of:
if the network element (1; 2; 3) is in a first state in which the network element operates as normal, the control plane and data plane are configured to interact; and
if the network element (1; 2; 3) is in a second state the network element (1; 2; 3) suppresses a control message (100) from the control plane (10) for the data plane (20) such that the configuration of the data plane (20) is preserved.

9. A method as claimed in Claim 8, wherein, if the network element (1; 2; 3) is in the second state, the method comprises the step of:
the control plane (10) does not send the control message (100) to the data plane (20).

10. A method as claimed in Claim 8, wherein in the second state, the method further comprises the steps of:
the control plane (10) sends a control message (100) to the data plane (20), and
the data plane (20) receives the control message (100) and,
the data plane (20) rejecting the control message (100).

11. A method as claimed in any one of Claims 8 to 10, further comprising the step of:
storing the control message (100) in a memory (7a; 7b; 7c).

## Patentansprüche

1. Netzwerkelement (1) für ein Kommunikationsnetzwerk, wobei das Kommunikationsnetzwerk eine Steuerungsebene (10) und eine Datenebene (20) aufweist, die entkoppelt sind, wobei das Netzwerkelement (1) einen Prozessor (5a) umfasst, der zum Implementieren von Datenebenen- und Steuerungsebenenfunktionalität konfiguriert ist, wobei das Netzwerkelement dazu konfiguriert ist, sich in einem von Folgenden zu befinden:
einem ersten Zustand, in dem das Netzwerkelement normal arbeitet und in dem sich eine Konfiguration der Datenebene (20) als Reaktion darauf ändert, dass die Datenebene (20) eine Steuerungsnachricht (100) von der Steuerungsebene (10) empfängt, und
einem zweiten Zustand, in dem das Netzwerkelement (1) dazu konfiguriert ist, eine Steuerungsnachricht (100) von der Steuerungsebene (10) für die Datenebene (20) zu unterdrücken, so dass die Konfiguration der Datenebene (20) erhalten bleibt.

2. Netzwerkelement (1) nach Anspruch 1, wobei die Steuerungsebene (1) die Steuerungsnachricht (100) in dem zweiten Zustand nicht an die Datenebene (20) sendet.

3. Netzwerkelement (1) nach Anspruch 1, wobei in dem zweiten Zustand die Steuerungsebene (1) dazu konfiguriert ist, die Steuerungsnachricht (100) an die Datenebene (20) zu senden und die Datenebene (20) dazu konfiguriert ist, die Steuerungsnachricht (100) von der Steuerungsebene (10) zurückzuweisen.

4. Netzwerkelement (1) nach einem der vorhergehenden Ansprüche, ferner umfassend einen Speicher (7a), der zum Speichern der Steuerungsnachricht (100) konfiguriert ist.

5. Netzwerkelement (1) nach einem der vorhergehenden Ansprüche, ferner umfassend eine Kommunikationsschnittstelle (9a), die zum Senden einer Statusnachricht an einen Knoten im Kommunikationsnetzwerk konfiguriert ist, wobei die Statusnachricht angibt, ob das Netzwerkelement (1) sich im ersten oder im zweiten Zustand befindet.

6. Netzwerkelement (1) nach einem der vorhergehenden Ansprüche, wobei die Datenebene (20) dazu konfiguriert ist, nur einen Ereignisbericht an die Steuerungsebene (10) zu senden, wenn sie sich im ersten Zustand befindet.

7. Netzwerkelement (1) nach einem der vorhergehenden Ansprüche, das zum Empfangen einer Administratornachricht von einem Netzwerkbetreiber des Telekommunikationsnetzwerks konfiguriert ist, wobei die Administratornachricht das Netzwerkelement (1) dazu konfiguriert, sich entweder im ersten oder im zweiten Zustand zu befinden.

8. Verfahren zum Steuern eines Netzwerkelements (1; 2; 3) eines Kommunikationsnetzwerks, wobei das Kommunikationsnetzwerk eine Steuerungsebene (10) und eine Datenebene (20) aufweist, die entkoppelt sind, und wobei das Netzwerkelement einen Prozessor umfasst, der zum Implementieren von Datenebenen- und Steuerungsebenenfunktionalität konfiguriert ist, wobei das Verfahren die folgenden Schritte umfasst:
falls sich das Netzwerkelement (1; 2; 3) in einem ersten Zustand befindet, in dem das Netzwerkelement normal arbeitet, sind die Steuerungsebene und die Datenebene dazu konfiguriert, zusammenzuwirken; und
falls sich das Netzwerkelement (1; 2; 3) in einem zweiten Zustand befindet, unterdrückt das Netzwerkelement (1; 2; 3) eine Steuerungsnachricht (100) von der Steuerungsebene (10) für die Datenebene (20), so dass die Konfiguration der Datenebene (20) erhalten bleibt.

9. Verfahren nach Anspruch 8, wobei, wenn sich das Netzwerkelement (1; 2; 3) im zweiten Zustand befindet, das Verfahren den folgenden Schritt umfasst:
die Steuerungsebene (10) sendet die Steuerungsnachricht (100) nicht an die Datenebene (20).

10. Verfahren nach Anspruch 8, wobei das Verfahren im zweiten Zustand ferner die folgenden Schritte umfasst:
die Steuerungsebene (10) sendet eine Steuerungsnachricht (100) an die Datenebene (20), und
die Datenebene (20) empfängt die Steuerungsnachricht (100), und
die Datenebene (20) weist die Steuerungsnachricht (100) zurück.

11. Verfahren nach einem der Ansprüche 8 bis 10, ferner den folgenden Schritt umfassend:
Speichern der Steuerungsnachricht (100) in einem Speicher (7a; 7b; 7c).

## Revendications

1. Élément de réseau (1) pour un réseau de communications, le réseau de communications ayant un plan de commande (10) et un plan de données (20) qui sont découplés, l'élément de réseau (1) comprenant un processeur (5a) configuré pour mettre en oeuvre une fonctionnalité de plan de données et de plan de commande, dans lequel l'élément de réseau est configuré pour être dans l'un :
d'un premier état dans lequel l'élément de réseau fonctionne normalement et dans lequel une configuration du plan de données (20) change en réponse au plan de données (20) recevant un message de commande (100) provenant du plan de commande (10), et
d'un second état dans lequel l'élément de réseau (1) est configuré pour supprimer un message de commande (100) provenant du plan de commande (10) pour le plan de données (20) de sorte que la configuration du plan de données (20) est conservée.

2. Élément de réseau (1) selon la revendication 1, dans lequel, dans le second état, le plan de commande (1) n'envoie pas le message de commande (100) au plan de données (20).

3. Élément de réseau (1) selon la revendication 1, dans lequel, dans le second état, le plan de commande (1) est configuré pour envoyer le message de commande (100) au plan de données (20), et le plan de données (20) est configuré pour rejeter le message de commande (100) provenant du plan de commande (10).

4. Élément de réseau (1) selon l'une quelconque des revendications précédentes, comprenant en outre une mémoire (7a) configurée pour stocker le message de commande (100).

5. Élément de réseau (1) selon l'une quelconque des revendications précédentes, comprenant en outre une interface de communication (9a) configurée pour envoyer un message d'état à un noeud dans le réseau de communications, le message d'état indiquant si l'élément de réseau (1) est dans le premier ou le second état.

6. Élément de réseau (1) selon l'une quelconque des revendications précédentes, dans lequel le plan de données (20) est configuré pour envoyer un rapport d'événement au plan de commande (10) uniquement lorsqu'il est dans le premier état.

7. Élément de réseau (1) selon l'une quelconque des revendications précédentes, configuré pour recevoir un message d'administrateur provenant d'un opérateur de réseau du réseau de télécommunications, dans lequel le message d'administrateur configure l'élément de réseau (1) pour être soit dans le premier soit dans le second état.

8. Procédé de commande d'un élément de réseau (1 ; 2 ; 3) d'un réseau de communications, le réseau de communications ayant un plan de commande (10) et un plan de données (20) qui sont découplés et l'élément de réseau comprenant un processeur configuré pour mettre en oeuvre une fonctionnalité de plan de données et de plan de commande, le procédé comprenant les étapes suivantes :
si l'élément de réseau (1 ; 2 ; 3) est dans un premier état dans lequel l'élément de réseau fonctionne normalement, le plan de commande et le plan de données sont configurés pour interagir ; et
si l'élément de réseau (1 ; 2 ; 3) est dans un second état, l'élément de réseau (1 ; 2 ; 3) supprime un message de commande (100) provenant du plan de commande (10) pour le plan de données (20) de sorte que la configuration du plan de données (20) est conservée.

9. Procédé selon la revendication 8, dans lequel, si l'élément de réseau (1 ; 2 ; 3) est dans le second état, le procédé comprend l'étape suivante :
le plan de commande (10) n'envoie pas le message de commande (100) au plan de données (20).

10. Procédé selon la revendication 8, dans lequel dans le second état, le procédé comprend en outre les étapes suivantes :
le plan de commande (10) envoie un message de commande (100) au plan de données (20), et
le plan de données (20) reçoit le message de commande (100) et, le plan de données (20) rejette le message de commande (100).

11. Procédé selon l'une quelconque des revendications 8 à 10, comprenant en outre l'étape de :
stockage du message de commande (100) dans une mémoire (7a ; 7b ; 7c) .
